(19) Europäisches Patentamt
European Patent Office
Office européen des brevets

(11) **EP 3 346 524 A1**

(12) **EUROPEAN PATENT APPLICATION**

(43) Date of publication:
**11.07.2018 Bulletin 2018/28**

(51) Int Cl.:
**H01M 2/20** (2006.01)          **H01M 10/42** (2006.01)
**H01M 10/48** (2006.01)          **G01K 7/02** (2006.01)

(21) Application number: **17150612.4**

(22) Date of filing: **09.01.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Samsung SDI Co., Ltd Gyeonggi-do 17084 (KR)**

(72) Inventors:
- HOFER, Maximilian
  8230 Hartberg (AT)
- KORHERR, Thomas
  8230 Hartberg (AT)
- HAMMERSCHMIED, Helmut
  8020 Graz (AT)

(74) Representative: **Gulde & Partner Patent- und Rechtsanwaltskanzlei mbB Wallstraße 58/59 10179 Berlin (DE)**

(54) **BATTERY MODULE WITH THERMOCOUPLE UNIT**

(57) The present invention refers to a battery module comprising:
- at least one battery cell;
- a protective circuit module electrically coupled to the battery cell and including a printed circuit board; and
- a thermocouple unit being assembled on the printed circuit board and including two wires composed of dissimilar conductors, which are joined together at a sensing point provided at the battery cell, the thermocouple unit providing a value for a temperature $T_{SENCE}$ at the sensing point.

**Fig. 6**

## Description

### Field of the Invention

The present invention relates to a battery module comprising a specific arrangement of a thermocouple unit suitable for measurement of a battery cell temperature.

### Technological Background

A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g. cylindrical or rectangular, depends on the battery's intended purpose.

Rechargeable batteries may be used as a battery module formed of a plurality of unit battery cells coupled in series and/or in parallel so as to provide a high energy density, e.g. for motor driving of a hybrid vehicle. That is, the battery module is formed by interconnecting the electrode terminals of the plurality of unit battery cells depending on a required amount of power and in order to realize a high-power rechargeable battery, e.g. for an electric vehicle.

Battery modules can be constructed either in block design or in modular design. In block designs each battery is coupled to a common current collector structure and a common battery management system and the unit thereof is housed. In modular designs, pluralities of battery cells are connected to form submodules and several submodules are connected to form the module. The battery management functions can then be at least partially realized on either module or submodule level and thus interchangeability might be improved. One or more battery modules are mechanically and electrically integrated, equipped with a thermal management system and set up for communication with one or more electrical consumers in order to form a battery system. The thermal management system includes usually a protective circuit module which is arranged next to the battery cells.

For monitoring or controlling a battery system usually comprises a battery management unit (BMU) and/or a battery management system (BMS). Such control units may be an integral part of the battery system and disposed within a common housing or may be part of a remote control unit communicating with the battery system via a suitable communication bus. The BMS/BMU is usually coupled to the controller of one or more electrical consumers as well as to each of the battery modules of the battery system. Usually each battery module comprises a cell supervision circuit (CSC) that is configured to maintain the communication with the BMS/BMU and with other battery modules. The CSC may be further configured to monitor the cell voltages of some or each of the battery module's battery cells and to actively or passively balance the voltages of the individual battery cells within the module.

For meeting the dynamic power demands of various electrical consumers connected to the battery system a static control of battery power output and charging is not sufficient. Thus, steady exchange of information between the battery system and the controllers of the electrical consumers is required. These information includes the battery systems actual state of charge (SoC), potential electrical performance, charging ability and internal resistance as well as actual or predicted power demands or surpluses of the consumers. One parameter controlling the state of each battery cell or battery module is the battery cell temperature. Therefore, temperature sensitive elements are provided within the battery module. Meanwhile, some solutions have been provided as how to keep the temperature sensitive element at the surface of the battery cell, since especially in automotive applications there may be strong external impacts. Each of these attempts includes mechanical complex arrangements of fixings with several parts thereby increasing significantly the costs of the battery module due to high manufacturing and material costs.

For example, US 2015/0214583 A1 discloses a battery module comprising a plurality of battery cells aligned in one direction and a temperature sensor having a first surface contacting at least one battery cell of the plurality of battery cells to measure a temperature of the at least one battery cell. The battery module further includes a case configured to press against a second surface of the temperature sensor opposite to the first surface. The case comprises a leaf spring pressing the temperature sensor in the direction of the battery cell.

Another example for ensuring close contact between the temperature sensor and the battery cell is disclosed in JP 5703458 B2.

US 2015/0110155 A1 relates generally to a thermocouple to collect temperature measurements from a battery module of electric vehicles. The battery module includes a plurality of battery cells and each battery cell includes a pair of terminals. Bus bars electrically couple the terminals of adjacent battery cells. Voltage sense leads are electrically coupled to the bus bars and a controller. Information collected by the voltage sense leads is used by the controller to measure voltage drop between adjacent battery cells. Temperature sense leads are provided in addition to the voltage sense leads. The temperature sense leads are coupled to the controller and the battery. At the battery, the temperature sense leads may connect to the terminals or bus bars. The temperature sense leads and the voltage sense leads are made of different materials and provide portions of thermocouples. The thermocouple thus includes a first branch having the voltage sense lead and a second branch having the temperature sense lead. A junction represents the interface between the dissimilar materials for one of the thermocouples and a temperature at the junction can then be determined by measuring the difference in voltages and using the thermoelectric properties of the dissimilar materials.

It is an object of the present invention to overcome or reduce at least some of the drawbacks of the prior art and to provide a battery system that may be established by a simple manufacturing process using non-expensive elements.

**Summary of Invention**

One or more of the drawbacks of the prior art could be avoided or at least reduced by means of the present invention. In particular, there is provided a battery module comprising:

- at least one battery cell;

- a protective circuit module electrically coupled to the battery cell and including a printed circuit board; and

- a thermocouple unit being assembled on the printed circuit board and including two wires composed of dissimilar conductors, which are joined together at a sensing point provided at the battery cell, the thermocouple unit providing a value for a temperature $T_{SENCE}$ at the sensing point.

Thus, one aspect of the present invention is to provide a battery module, wherein a thermocouple unit for measurement of the actual temperature of one or more of the battery cells, which are part of the battery module, is integrated into the protective circuit module. More precisely, the thermocouple unit is provided on a printed circuit board (PCB) of the protective circuit module. A thermocouple is an electrical device consisting of two different conductors forming electrical junctions at differing temperatures. A thermocouple produces a temperature-dependent voltage as a result of the thermoelectric effect, and this voltage can be interpreted to measure temperature. The thermocouple unit includes two wires made of dissimilar metallic conductors, which are in contact with a common sensing point (or junction) at a battery cell. Here, the protective circuit module is part of the cell supervision circuit (CSC) of the battery system.

The aforementioned sensing point may be for example a surface of the battery cell or a bus bar interconnecting terminals of adjacent battery cells. If the battery module includes at least two battery cells which terminals are interconnected by a bus bar, the sensing point of the thermocouple unit may thus be provided at a surface of the bus bar.

That is, the total manufacturing process of the battery module could be further simplified and the equipment costs are reduced. There is no separate temperature sensing unit which needs to be connected to the battery cell as well as to the protective circuit module during the manufacturing process of the battery module. Since the thermocouple unit is integrated into the printed circuit board of the protective circuit module, solely the two wires of the thermocouple unit need to be fixed on a selected sensing point at the battery cell for example by welding. Hence, the number of overall process steps for manufacturing the battery module can be reduced and the mounting can be automated.

According to a preferred embodiment, the battery module further comprises a temperature sensitive element, especially a negative temperature coefficient (NTC) thermistor, provided at a surface of the printed circuit board for measurement of a reference temperature $T_{REF}$ of the thermocouple unit. That is, the temperature sensitive element is integrated into the printed circuit board of the protective circuit module and the reference temperature $T_{REF}$ equals the temperature of the printed circuit board. A negative temperature coefficient (NTC) thermistor of which the electrical resistance value decreases due to a negative temperature coefficient as the temperature of the printed circuit board increases may be used since such a sensor may be very simple established on the printed circuit board as a chip thermistor.

The temperature $T_{SENCE}$ at the sensing point may be given by equation

$$T_{SENSE} = T_{REF} + \Delta T_{REF,\ SENSE}$$

where $\Delta T_{REF,\ SENCE}$ is a temperature difference determined by the thermocouple unit on basis of a voltage difference $\Delta V$ of the two wires. Preferably, the thermocouple unit includes an operational amplifier for determination of the voltage difference $\Delta V$ of the two wires. The operational amplifier may include a non-inverting amplifier with an 100 k$\Omega$ resistor in a feedback path. According to said embodiment, the thermocouple unit includes a robust circuit for supplying a value for a voltage difference, which is detectable between the two wires made of dissimilar conducting materials, more precisely detectable at the ends of the two wires, which are in contact with the part of the printed circuit board, where the reference temperature is measured.

Instead of a solely analog inclusion of the reference temperature, the values may be digitalized so as to numerically determine the sensed temperature under consideration of a characteristic function E(T) of the specific thermocouple system. Therefore, the thermocouple unit preferably comprises a microcontroller, which includes

- a database adapted for storage of a characteristic function E(T) for a thermocouple's behavior;

- a first input line for the reference temperature $T_{REF}$ measured by the temperature sensitive element;

- a second input line for the measured voltage difference $\Delta V$ of the two wires; and

- an evaluation unit for determination of the temperature $T_{SENCE}$ by equation

$$E(T_{SENSE}) = \Delta V + E(T_{REF}).$$

A microcontroller (or MCU, short for microcontroller unit) could be understood as a small computer on a single integrated circuit containing a processor core, memory, and programmable input/output peripherals. Program memory in the form of Ferroelectric RAM, NOR flash or OTP ROM is also often included on chip, as well as a typically small amount of RAM. Microcontrollers are designed for embedded applications, like the present one.

Thus, the printed circuit board involves a microcontroller having a memory, which includes the characteristic function E(T) that has been measured and interpolated over a range of temperatures for the particular thermocouple type used. To obtain the desired measurement of $T_{SENSE}$, it would not be sufficient to just measure the voltage difference $\Delta V$. The temperature $T_{REF}$ at the reference junction (i.e. the sensing point in the terms of the present invention) must also be known. Accordingly, the microcontroller includes input lines for the voltage difference $\Delta V$ determined by for example the above mentioned circuit including the operational amplifier as well as for the reference temperature $T_{REF}$ provided as a digital value by for example the above mentioned NTC thermistor. Within the processor core (or evaluation unit) of the microcontroller, the temperature $T_{SENCE}$ is determined under consideration of the characteristic function E(T) of the particular thermocouple type.

According to another aspect of the present invention, a vehicle including a battery module as defined above is provided. The vehicle may be an automobile.

Further aspects of the present invention could be learned from the dependent claims or the following description.

**Brief Description of the Drawings**

Features will become apparent to those of ordinary skill in the art by describing in detail exemplary embodiments with reference to the attached drawings in which:

Fig. 1    illustrates a perspective view of a battery module.

Fig. 2    is a side view on a battery module bearing a printed circuit board with multiple thermocouple units according to an embodiment of the present invention.

Fig. 3    is a partially view on one of the thermocouple unit of the embodiment of Fig. 2.

Fig. 4    is thermistor circuit useful for measurement of the temperature on the printed circuit board according to an embodiment of the invention.

Fig. 5    is thermocouple circuit useful for measurement of a voltage difference of the thermocouple unit according to an embodiment of the invention.

Fig. 6    is a flow diagram illustrating the process of determination of the sensed temperature using a microcontroller.

**Detailed Description of the Invention**

Features of the inventive concept and methods of accomplishing the same may be understood more readily by reference to the following detailed description of embodiments and the accompanying drawings. Hereinafter, example embodiments will be described in more detail with reference to the accompanying drawings, in which like reference numbers refer to like elements throughout. The present invention, however, may be embodied in various different forms, and should not be construed as being limited to only the illustrated embodiments herein. Rather, these embodiments are provided as examples so that this disclosure will be thorough and complete, and will fully convey the aspects and features of the present invention to those skilled in the art. Accordingly, processes, elements, and techniques that are not necessary to those having ordinary skill in the art for a complete understanding of the aspects and features of the present invention may not be described. Unless otherwise noted, like reference numerals denote like elements throughout the attached drawings and the written description, and thus, descriptions thereof will not be repeated. In the drawings, the relative sizes of elements, layers, and regions may be exaggerated for clarity.

Spatially relative terms, such as "beneath," "below," "lower," "under," "above," "upper," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below" or "beneath" or "under" other elements or features would then be oriented "above" the other elements or features. Thus, the example terms "below" and "under" can encompass both an orientation of above and below. The device may be otherwise oriented (e.g., rotated 90 degrees or at other orientations) and the spatially relative descriptors used herein should be interpreted accordingly.

The electronic or electric devices according to embodiments of the present invention described herein may be implemented utilizing any suitable hardware, firmware (e.g. an application-specific integrated circuit), software, or a combination of software, firmware, and hardware. For example, the various components of these devices may be formed on one integrated circuit (IC) chip or on separate IC chips. Here, the various components of these devices are implemented on a printed circuit board (PCB). Components of these devices may be a process or thread, running on one or more processors, in one or more computing devices, executing computer program instructions and interacting with other system components for performing the functionalities described herein. The computer program instructions are stored in a memory which may be implemented in a computing device using a standard memory device, such as, for example, a random access memory (RAM). The computer program instructions may also be stored in other non-transitory computer readable media.

Unless otherwise defined, all terms (including technical and scientific terms) used herein have the same meaning as commonly understood by one of ordinary skill in the art to which the present invention belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

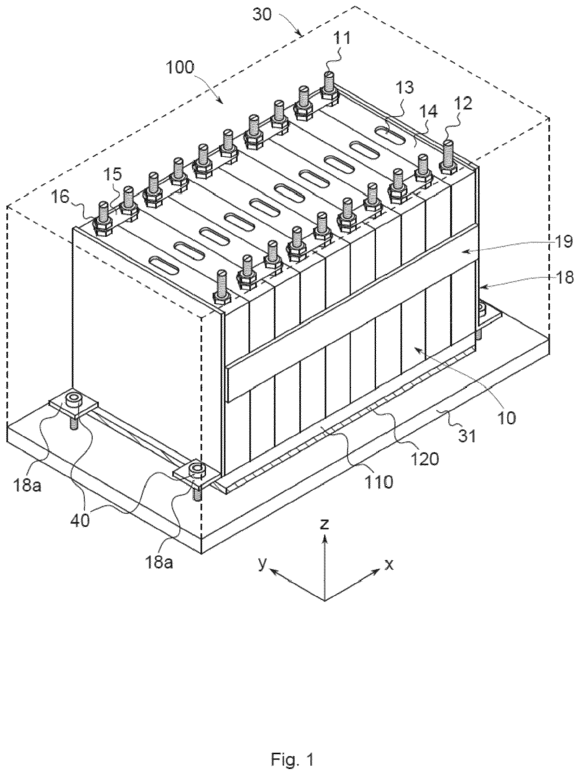

Referring to FIG. 1, an exemplary embodiment of a conventional battery module 100 includes a plurality of battery cells 10 aligned in one direction and a heat exchange member 110 provided adjacent to a bottom surface of the plurality of battery cells 10. A pair of end plates 18 are provided to face wide surfaces of the battery cells 10 at the outside of the battery cells 10, and a connection plate 19 is configured to connect the pair of end plates 18 to each other thereby fixing the plurality of battery cells 10 together. Fastening portions 18a on both sides of the battery module 100 are fastened to a support plate 31 by bolts 40. The support plate 31 is part of a housing 30. In addition, an elastic member 120 made of rubber or other elastic materials may be interposed between the support plate 31 and the heat exchange member 110.

Here, each battery cell 10 is a prismatic (or rectangular) cell, the wide flat surfaces of the cells being stacked together to form the battery module. Further, each battery cell 10 includes a battery case configured for accommodation of an electrode assembly and an electrolyte. The battery case is hermetically sealed by a cap assembly 14. The cap assembly 14 is provided with positive and negative electrode terminals 11 and 12 having different polarities, and a vent 13. The vent 13 is a safety means of the battery cell 10, which acts as a passage through which gas generated in the battery cell 10 is exhausted to the outside of the battery cell 10. The positive and negative electrode terminals 11 and 12 of neighboring battery cells 10 are electrically connected through a bus bar 15, and the bus bar 15 may be fixed by a nut 16 or the like. Hence, the battery module 100 may be used as power source unit by electrically connecting the plurality of battery cells 10 as one bundle. Rechargeable secondary batteries may be used as the battery cells 10, especially lithium secondary batteries. The battery module 100 may be a 48V battery for automotive application.

Generally, the battery cells 10 generate a large amount of heat while being charged/discharged. The generated heat is accumulated in the battery cells 10, thereby accelerating the deterioration of the battery cells 10. Therefore, the battery module 100 further includes a heat exchange member 110, which is provided adjacent to the bottom surface of the battery cells 10 so as to cool down the battery cells 10.

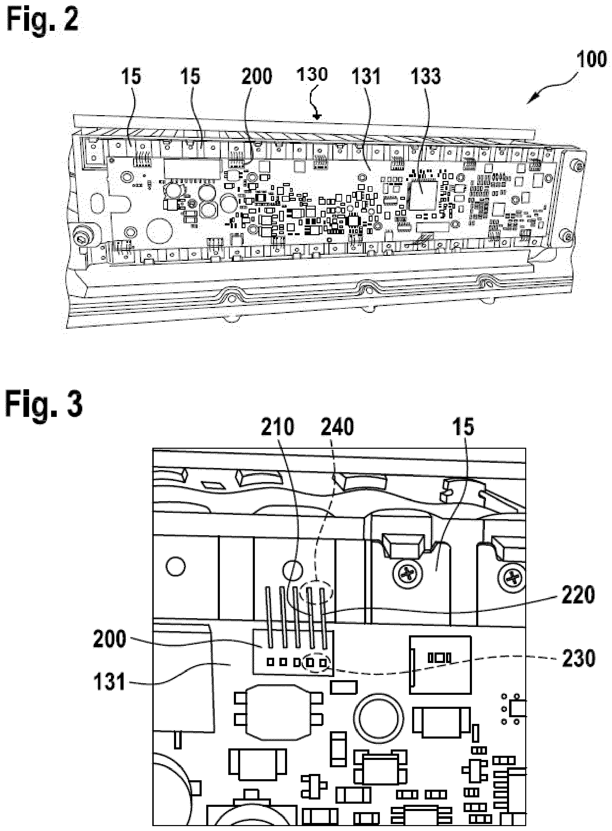

Fig. 2 is a side view on a battery module 100 bearing a printed circuit board with multiple thermocouple units 200 according to an embodiment of the present invention. Fig. 3 is a partially view on one of the thermocouple units 200 of the embodiment of Fig. 2.

In general, battery cells of the battery module 100 are electrically connected to a protective circuit module 130. According to the present embodiment, there is only one protective circuit module 130, which is connected to all of the battery cells of the battery module 100. However, there may be also two or more separate protective circuit modules being connected to a group of battery cells or single battery cells.

The protective circuit module is made to lie down at sides of the battery cells such that there is a gap between the battery cell surface and the side of the protective circuit module facing the battery cells. Here, the protective circuit module is being arranged at the upper surface of the battery cells bearing the electrode terminals and. In particular, the protective circuit module is electrically connected to the bus bars 15 interconnecting battery cells of the battery module 100 to control charging and discharging and preventing the battery cells from being over-charged or over-discharged.

The protective circuit module includes a rigid printed circuit board (PCB) 131 with connection terminals (not shown) for the terminals of the battery cells and at least one semiconductor device 133 is formed on an upper surface of the PCB 131. The semiconductor device 133 may comprise an integrated circuit that is adapted to compare the measured temperature of a battery cell with a limit value for allowable battery cell temperature. The PCB 131 includes a wiring pattern (not shown) formed on a surface of the PCB 131. A main body of the PCB 131 may be formed of a rigid electrically insulating material like polyimide (PI) or polyethylene (PET). The wiring pattern may be made of an electrically conductive material, such as copper (Cu), titanium (Ti), nickel (Ni), or palladium (Pd).

The semiconductor device 133 applies signals for controlling operations of the battery cells. In particular, the semiconductor device 133 controls charging or discharging extents through high current lines of the battery cells. In addition, the semiconductor device 133 applies signals indicating voltages, current and temperatures of the battery cells to prevent for example over-charge or over-discharge.

To this end, the semiconductor device 133 applies information about the temperatures of the battery cells from a thermocouple unit 200 and controls the operations of the battery cells. Here, the information about the voltages, currents and temperatures may be transferred to the semiconductor device 133 through the wiring pattern of the PCB 131.

The thermocouple unit 200 includes a first wire 210 and second wire 220 each connecting the bus bar 15 and the PCB 131. More precisely, the first wire 210 and the second wire 220 are welded to a common area 230 provided at the PCB 131. Within the common area 230 the temperature of the PCB 131 should not deviate. The other ends the first wire 210 and the second wire 220 are welded to the bus bar 15 providing a common sensing point 240 (or junction). Within the sensing point 240 the temperature of the bus bar 15 should not deviate.

The first wire 210 and the second wire 220 are made of dissimilar thermal conducting materials, especially metallic materials like pure metal elements of alloys thereof. For example, the first wire 210 may be made of aluminum (Al) and the second wire 220 may be made of copper (Cu), however not limited thereto.

The physical principle of Seebeck effect refers to an electromotive force whenever there is a temperature gradient in a conductive material. Where there is no internal current flow, the gradient of voltage is directly proportional to the gradient in temperature. The proportional factor is called Seebeck coefficient and represents a material specific characteristics. Keeping in mind that the thermocouple unit 200 includes two wires 210, 220 of different materials a characteristic function E(T) could be determined for capturing thermocouple's behavior.

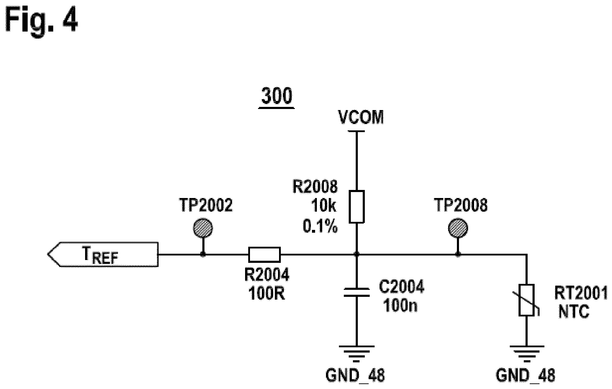

Fig. 4 is thermistor circuit 300 useful for measurement of the temperature on the PCB 131 according to an embodiment of the invention. The thermistor circuit 300 is implemented within the PCB 131 and - according to the illustrated embodiment - the thermistor is an NTC thermistor. Such a thermistor circuit 300 is common knowledge and for the purpose of the present invention, the only important aspect is that the circuit 300 is assembled on the PCB 131 such that it provides a reference temperature $T_{REF}$ for the common area 230 of the PCB 131.

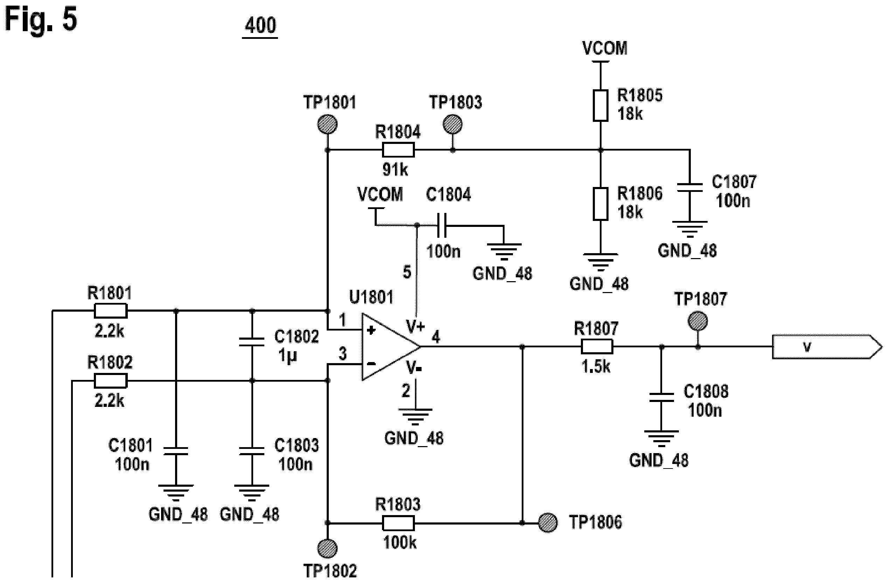

Fig. 5 is thermocouple circuit 400 useful for measurement of a voltage difference $\Delta V$ of the thermocouple unit 200 according to an embodiment of the invention. The thermocouple circuit 400 is assembled on the PCB 131. The temperature $T_{SENCE}$ at the sensing point 240 is given by equation

$$T_{SENSE} = T_{REF} + \Delta T_{REF;\ SENSE}$$

where $\Delta T_{REF,\ SENCE}$ is a temperature difference determined by the thermocouple unit 200 on basis of a voltage difference $\Delta V$ of the first and second wires 210, 220.

Therefore, the thermocouple circuit 400 of the thermocouple unit 200 includes an operational amplifier for determination of the voltage difference $\Delta V$ of the two wires 210, 220. The operational amplifier includes a non-inverting amplifier with an 100 k$\Omega$ resistor R1803 in a feedback path. The first wire 210 is electrically coupled to a non-inverting input terminal 1 of the amplifier via a resistor R1801. The second wire 220 is electrically coupled to an inverting input terminal 3 of the amplifier via a resistor R1802. The output terminal 4 of the amplifier is passed through resistor 1807 so as to provide a characteristic signal for the voltage difference $\Delta V$. In this embodiment, the resistors R1801 and R1802 exemplarily have the same value of 2.2k$\Omega$. The resistor 1807 has a value of 1.5k$\Omega$.

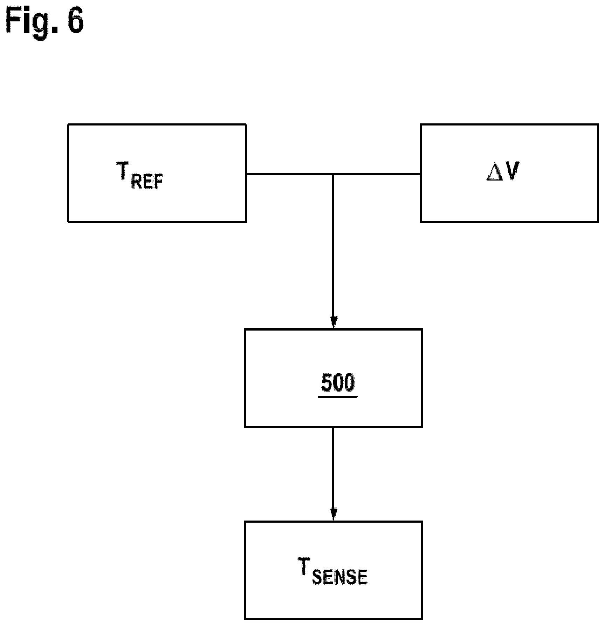

Fig. 6 is a flow diagram illustrating the process of determination of the sensed temperature $T_{SENSE}$ using a microcontroller 500. Basically, the input data of the microcontroller 500 include the reference temperature $T_{REF}$ provided by the thermistor circuit 300 and the voltage difference $\Delta V$ provided by the thermocouple circuit 400. The microcontroller 500 further includes a memory unit for storage of a characteristic function E(T) for the specific thermocouple's behavior (not shown). The microcontroller 500 numerically determines the sensed temperature $T_{SENSE}$ under consideration of the characteristic function E(T) by equation

$$E(T_{SENSE}) = \Delta V + E(T_{REF}).$$

**Claims**

1.   A battery module (100), comprising:

- at least one battery cell (10);
- a protective circuit module electrically coupled to the battery cell (10) and including a printed circuit board (131); and
- a thermocouple unit (200) being assembled on the printed circuit board (131) and including two wires (210, 220) composed of dissimilar conductors, which are joined together at a sensing point (240) provided at the battery cell (10), the thermocouple unit (200) providing a value for a temperature $T_{SENCE}$ at the sensing point (240).

2. The battery module of claim 1, further comprising a temperature sensitive element provided at a surface of the printed circuit board (131) for measurement of a reference temperature $T_{REF}$ of the thermocouple unit (200).

3. The battery module of claim 2, wherein the temperature sensitive element is a negative temperature coefficient (NTC) thermistor.

4. The battery module of claim 2 or 3, wherein the temperature $T_{SENCE}$ at the sensing point (240) is given by equation

$$T_{SENSE} = T_{REF} + \Delta T_{REF,\ SENSE}$$

where $\Delta T_{REF,\ SENCE}$ is a temperature difference determined by the thermocouple unit (200) on basis of a voltage difference $\Delta V$ of the two wires (210, 220).

5. The battery module of claim 4, wherein the thermocouple unit (200) includes an operational amplifier for determination of the voltage difference $\Delta V$ of the two wires (210, 220).

6. The battery module of claim 5, wherein the operational amplifier includes a non-inverting amplifier with an 100 k$\Omega$ resistor in a feedback path.

7. The battery module of any one of the preceding claims, wherein the thermocouple unit (200) comprises a microcontroller (500), the microcontroller (500) including

- a database adapted for storage of a characteristic function E(T) for a thermocouple's behavior;
- a first input line for the reference temperature $T_{REF}$ measured by the temperature sensitive element;
- a second input line for the measured voltage difference $\Delta V$ of the two wires; and
- an evaluation unit for determination of the temperature $T_{SENCE}$ by equation

$$E(T_{SENSE}) = \Delta V + E(T_{REF}).$$

8. The battery module of any one of the preceding claims, wherein the battery module (100) includes at least two battery cells (10), which terminals (11, 12) are interconnected by a bus bar (15), wherein the sensing point (240) of the thermocouple unit (200) is provided at a surface of the bus bar (15).

9. A vehicle including a battery module (100) according to any one of the preceding claims.

Fig. 1

## Fig. 2

15    15    200    130    131    133    100

## Fig. 3

210    240    15

220

200
131

230

# Fig. 4

# Fig. 5

<u>400</u>

EP 3 346 524 A1

# Fig. 6

$T_{REF}$

$\triangle V$

500

$T_{SENSE}$

Europäisches
Patentamt

European
Patent Office

Office européen
des brevets

# EUROPEAN SEARCH REPORT

Application Number

EP 17 15 0612

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2010/040106 A2 (MOBIUS POWER INC [US]; PATEL AAKAR [US]; JUZKOW MARC [US]) 8 April 2010 (2010-04-08) | 1,9 | INV. H01M2/20 H01M10/42 H01M10/48 |
| Y | * paragraph [0029] - paragraph [0030] * * figure 2 * | 2-7 | |
| X | US 2012/176081 A1 (SCHAEFER TIM [DE]) 12 July 2012 (2012-07-12) * figure 1 * * paragraph [0039] - paragraph [0040] * * paragraph [0039] * | 1 | ADD. G01K7/02 |
| X | US 2015/318582 A1 (BROCKMAN DARYL C [US] ET AL) 5 November 2015 (2015-11-05) * figures 3, 4 * * paragraph [0024] * * paragraph [0026] * * paragraph [0030] - paragraph [0031] * * paragraph [0042] * * paragraph [0022] * | 1 | |
| X | EP 2 410 591 A1 (EXA ENERGY TECHNOLOGY CO LTD [TW]) 25 January 2012 (2012-01-25) * figure 2 * * paragraph [0008] - paragraph [0014] * | 1 | TECHNICAL FIELDS SEARCHED (IPC) H01M G01K |
| Y | US 2016/161342 A1 (EGLEY FRED DENNIS [US] ET AL) 9 June 2016 (2016-06-09) * figure 2 * * paragraph [0032] - paragraph [0035] * | 2-7 | |
| Y | US 2012/179407 A1 (GE LIANG [SG] ET AL) 12 July 2012 (2012-07-12) * figure 1 * * paragraph [0004] - paragraph [0005] * * paragraph [0031] - paragraph [0033] * | 2-7 | |

-/--

The present search report has been drawn up for all claims

| Place of search | Date of completion of the search | Examiner |
|---|---|---|
| The Hague | 4 September 2017 | Fertig, Andrea |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/059190 A1 (KOSSAKOVSKI DMITRI [US] ET AL) 7 March 2013 (2013-03-07)<br>* paragraph [0056] - paragraph [0062] *<br>* paragraph [0094] - paragraph [0100] *<br>* paragraph [0083] - paragraph [0085] *<br>* paragraph [0066] *<br>* figures 4, 15, 20-28 * | 1,8 | |
| A | US 2016/315359 A1 (TYLER MATTHEW R [US] ET AL) 27 October 2016 (2016-10-27)<br>* figures 2, 9 *<br>* paragraph [0039] *<br>* paragraph [0045] * | 8 | |
| A | EP 2 631 967 A1 (SAMSUNG SDI CO LTD [KR]; BOSCH GMBH ROBERT [DE])<br>28 August 2013 (2013-08-28)<br>* figures 2, 4, 6 *<br>* paragraph [0056] - paragraph [0058] *<br>* paragraph [0068] * | 8 | |

TECHNICAL FIELDS
SEARCHED      (IPC)

The present search report has been drawn up for all claims

| Place of search | Date of completion of the search | Examiner |
|---|---|---|
| The Hague | 4 September 2017 | Fertig, Andrea |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

Europäisches
Patentamt

European
Patent Office

Office européen
des brevets

Application Number

EP 17 15 0612

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**
**SHEET B**

Application Number

EP 17 15 0612

The Search Division considers that the present European patent application does not comply with the requirements of unity of invention and relates to several inventions or groups of inventions, namely:

    1. claims: 2-7, 9(completely); 1(partially)

        battery module with thermocopule unit being assembled on a printed circuit board and means and method steps for determining the temperature TSENSE at the sensing point, where the means are integrated into the printed circuit board.

                         ---

    2. claims: 8(completely); 1(partially)

        battery module with thermocopule unit being assembled on a printed circuit board and attachment of the sensing point of the thermocouple unit at the bus-bars.

                         ---

## ANNEX TO THE EUROPEAN SEARCH REPORT
## ON EUROPEAN PATENT APPLICATION NO.

EP 17 15 0612

This annex lists the patent family members relating to the patent documents cited in the above-mentioned European search report.
The members are as contained in the European Patent Office EDP file on
The European Patent Office is in no way liable for these particulars which are merely given for the purpose of information.

04-09-2017

| Patent document cited in search report | Publication date | Patent family member(s) | Publication date |
|---|---|---|---|
| WO 2010040106 A2 | 08-04-2010 | CN 102217158 A<br>EP 2342791 A2<br>JP 2012504932 A<br>KR 20110081250 A<br>TW 201021349 A<br>US 2010119881 A1<br>WO 2010040106 A2 | 12-10-2011<br>13-07-2011<br>23-02-2012<br>13-07-2011<br>01-06-2010<br>13-05-2010<br>08-04-2010 |
| US 2012176081 A1 | 12-07-2012 | BR 112012003778 A2<br>CN 102484296 A<br>DE 102009037725 A1<br>EP 2467896 A1<br>JP 2013502673 A<br>KR 20120083318 A<br>US 2012176081 A1<br>WO 2011020547 A1 | 19-04-2016<br>30-05-2012<br>24-02-2011<br>27-06-2012<br>24-01-2013<br>25-07-2012<br>12-07-2012<br>24-02-2011 |
| US 2015318582 A1 | 05-11-2015 | CN 106537638 A<br>EP 3138142 A1<br>US 2015318582 A1<br>WO 2015167886 A1 | 22-03-2017<br>08-03-2017<br>05-11-2015<br>05-11-2015 |
| EP 2410591 A1 | 25-01-2012 | EP 2410591 A1<br>TW M394640 U | 25-01-2012<br>11-12-2010 |
| US 2016161342 A1 | 09-06-2016 | CN 104048776 A<br>KR 20140111991 A<br>TW 201506368 A<br>US 2014269821 A1<br>US 2016161342 A1 | 17-09-2014<br>22-09-2014<br>16-02-2015<br>18-09-2014<br>09-06-2016 |
| US 2012179407 A1 | 12-07-2012 | SG 182864 A1<br>US 2012179407 A1 | 30-08-2012<br>12-07-2012 |
| US 2013059190 A1 | 07-03-2013 | DE 112012002935 T5<br>JP 2014527684 A<br>KR 20140057260 A<br>US 2013059190 A1<br>US 2014331688 A1<br>WO 2013009759 A2 | 15-05-2014<br>16-10-2014<br>12-05-2014<br>07-03-2013<br>13-11-2014<br>17-01-2013 |
| US 2016315359 A1 | 27-10-2016 | US 2016315359 A1<br>WO 2016171783 A1 | 27-10-2016<br>27-10-2016 |
| EP 2631967 A1 | 28-08-2013 | CN 103296321 A<br>EP 2631967 A1 | 11-09-2013<br>28-08-2013 |

EPO FORM P0459

For more details about this annex : see Official Journal of the European Patent Office, No. 12/82

page 1 of 2

**ANNEX TO THE EUROPEAN SEARCH REPORT
ON EUROPEAN PATENT APPLICATION NO.**

EP 17 15 0612

This annex lists the patent family members relating to the patent documents cited in the above-mentioned European search report.
The members are as contained in the European Patent Office EDP file on
The European Patent Office is in no way liable for these particulars which are merely given for the purpose of information.

04-09-2017

| Patent document cited in search report | Publication date | Patent family member(s) | Publication date |
|---|---|---|---|
| | | JP  2013175432 A | 05-09-2013 |
| | | KR  20130097046 A | 02-09-2013 |
| | | US  2013224564 A1 | 29-08-2013 |

EPO FORM P0459

For more details about this annex : see Official Journal of the European Patent Office, No. 12/82

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20150214583 A1
- JP 5703458 B
- US 20150110155 A1